# EUROPÄISCHE PATENTANMELDUNG

(11) **EP 2 151 613 A1**
(43) Veröffentlichungstag der Anmeldung: **10.02.2010**
(21) Anmeldenummer: 09166790.7
(22) Anmeldetag: 30.07.2009
(51) Int. Cl.: F16K 11/074, A47J 31/46

(54) **Keramikscheibenventil für einen Heißgetränkeautomaten**

(30) Priorität: 08.08.2008 DE 102008041122
(71) Anmelder: BSH Bosch und Siemens Hausgeräte GmbH, 81739 München (DE)
(72) Erfinder: Eder, Florian, 83132, Pittenhart (DE); Jäger, Harald, 83349, Palling (DE)

(57) **Zusammenfassung**

Die Erfindung betrifft ein Keramikscheibenventil (1), insbesondere für die Verteilung von Heißwasser und/oder Wasserdampf in einem Heißgetränkeautomaten. Es weist ein Ventilgehäuse (2) auf mit darin in einem Paket angeordneten Ventilscheiben (29; 31; 33), wovon mindestens eine Ventilscheibe (29; 31; 33) eine verstellbare Steuerscheibe (31) mit wenigstens einer Kanalbohrung ist, und wenigstens eine feststehende Ventilscheibe (29; 33) mindestens einen Eingangs- (35b; 35d) und/oder Ausgangskanal (37b, 37d) umfasst, und mit mindestens einem Zulaufabschnitt (5, 5', 9a, 21a; 21b, 21c, 21d; 35b; 35d) stromauf und einem Ablaufabschnitt (37b; 37d, 25a; 25b; 25c; 25d, 9b, 23a; 23b; 23c; 25d') stromab der Steuerscheibe (31). Die Erfindung ist dahingehend weitergebildet, dass eine Verteilungsaussparung (9a; 9b) im Zulaufabschnitt (5, 5', 9a, 21a; 21b, 21c, 21d; 35b; 35d) und/oder im Ablaufabschnitt (37b; 37d, 25a; 25b; 25c; 25d, 9b, 23a; 23b; 23c; 25d') vorgesehen ist, die mehrere Eingangskanäle (35b, 35d) und/oder mehrere Ausgangskanäle (37b, 37d) miteinander verbindet.

## Beschreibung

Die Erfindung betrifft ein Keramikscheibenventil, insbesondere für die Verteilung von Heißwasser und/oder Wasserdampf in einem Heißgetränkeautomaten, mit einem Ventilgehäuse, mit darin in einem Paket angeordneten Ventilscheiben, wovon mindestens eine Ventilscheibe eine verstellbare Steuerscheibe mit wenigstens einer Kanalbohrung ist und wenigstens eine feststehende Ventilscheibe mindestens einen Eingangs- und/oder Ausgangskanal umfasst, mit mindestens einem Zulaufabschnitt stromauf und einem Ablaufabschnitt stromab der Steuerscheibe.

Keramische Scheibenventile dieser Art sind beispielsweise aus der EP 1 916 495 A2 bekannt und werden unter anderem in Heißgetränkeautomaten, wie beispielsweise Kaffeevollautomaten und Espressomaschinen eingesetzt. Sie dienen dort dazu, beispielsweise Heißwasser einer Brühkammer für die Zubereitung von Kaffee oder Wasserdampf einer Aufschäumdüse zum Erhitzen und Aufschäumen von Milch, zum Beispiel für die Zubereitung von Cappuccino zuzuführen. In einer weiteren Schaltstellung kann durch solche Ventile ein Weg zu einer Drainageöffnung freigeschaltet werden, so dass sich gegebenenfalls vorhandener Restdampf in einem dem Ventil vorgeschalteten Durchlauferhitzer entspannen kann, oder Reinigungsfunktionen des Heißgetränkeautomaten realisiert werden können, wobei das anfallende Reinigungswasser über die Drainageleitung abgeleitet wird.

Das Keramikscheibenventil weist ein Ventilgehäuse auf, das im Wesentlichen aus einer Ober- und einer Unterseite besteht. In die Ober- und die Unterseite des Ventilgehäuses sind Zulauf bzw. Ablaufbohrungen eingelassen. Dabei sind in der Unterseite des Ventilgehäuses zwei Kanäle vorgesehen die im Ventilgehäuse über einen Verbindungskanal miteinander verbunden sind. Er dient dazu, dem zweiten Kanal in der Unterseite des Ventilgehäuses, welcher ein Drainagekanal ist, überschüssiges Wasser aus dem ersten Kanal, einem Zulaufkanal, zuzuführen.

Ähnliche verbindende Kanäle zwischen einzelnen Eingangs- bzw. Ausgangskanälen sind, in Abhängigkeit von der Funktion des jeweiligen Keramikventils, oftmals gewünscht.

Bisher war eine derartige Ausgestaltung jedoch nur im sehr begrenzten Rahmen und mit Hilfe aufwändiger Maßnahmen möglich: Mit steigender Anzahl von Kanälen im Gehäuse werden die notwendigen Spritzwerkzeuge für die Gehäuseherstellung immer komplizierter und der benötigte Bauraum immer größer.

Ausgehend von der dargestellten Problematik der zunehmenden Komplexität von Ausgestaltungen von Keramikventilen mit Zunahme ihrer Funktionalitäten, liegt der vorliegenden Erfindung die Aufgabe zugrunde, ein vereinfachtes und einfacher herzustellendes Keramikscheibenventil für Kaffeevollautomaten bereitzustellen.

Erfindungsgemäß wird diese Aufgabe gelöst durch ein Keramikscheibenventil der eingangs genannten Art mit einer Verteilungsaussparung im Zulaufabschnitt und/oder im Ablaufabschnitt, die mehrere Eingangskanäle und/oder mehrere Ausgangskanäle miteinander verbindet.

Eine solche Verteilungsaussparung ist im Zulaufabschnitt und/oder im Ablaufabschnitt positioniert. Ein Zulaufabschnitt ist durch Kanäle in all den Ventilteilen gebildet, die stromauf der Steuerscheibe liegen, und ein Ablaufabschnitt durch Kanäle in all den Ventilteilen, die stromab der Steuerscheibe positioniert sind.

Bevorzugt ist die Verteilungsaussparung in einem feststehenden Ventilteil angeordnet und dort an einer Berühr- und/oder Grenzfläche zwischen unterschiedlichen Ventilteilen, beispielsweise dem Gehäuse einerseits und einer feststehenden Ventilscheibe andererseits. Als Ventilteil sind insbesondere das Gehäuse, die Keramikscheiben und ggf. Dichtungen zwischen Gehäuse und Keramikscheiben zu verstehen. Feststehend sind all jene Ventilteile, die nicht wie die verstellbare Steuerscheibe mindestens in eine Richtung bewegt, beispielsweise um eine Drehachse rotiert oder linear verschoben werden können.

Die Verteilungsaussparung schafft eine Leitungsverbindung mehrerer Kanäle des einen Teils des Ventils, beispielsweise des Gehäuses, mit einem einzigen Kanal des anderen Teils, beispielsweise in der feststehenden Scheibe. Sie stellt also eine Gabelung dar, die aus einem Kanal im einen Ventilteil mehrere Kanäle im anderen Ventilteil bedient. Sie kann typischerweise als eine Vertiefung in einem oder mehreren Bauteilen des Keramikscheibenventils ausgebildet sein.

Sie ist an einer Oberfläche des Ventilteils angeordnet, die im eingebauten Zustand ein anderes Ventilteil berührt bzw. an ein solches angrenzt. Sie erstreckt sich damit in der Regel rechtwinklig zu dem betreffenden Kanal, dessen Gabelung sie bildet. Weil die Oberfläche des Ventilteils leichter zugänglich ist als ein Kanal in seinem Inneren, lässt sich die Verteilungsaussparung relativ einfach zusammen mit dem Ventilteil herstellen oder nachträglich ausbilden. Denn insbesondere bei einer Nachbearbeitung eines Ventilteils zum Beispiel durch Fräsen kann eine Aussparung oder Vertiefung in dessen Oberfläche einfacher hergestellt werden als eine Gabelung im Innenraum des betreffenden Teils. Auf diese Weise können einzelne oder mehrere Kanäle im Gehäuse eingespart werden und das entsprechende Ventilteil bei gleicher Funktionalität einfacher hergestellt werden.

Alternativ zu einer Vertiefung in einem oder mehreren Teilen des Keramikscheibenventils kann eine Verteilungsaussparung auch durch eine Weglassung von Material in einem bestimmten Bereich eines oder mehrerer Ventilteile vorgesehen sein. Eine Aussparung ist dann beispielsweise in einer Ventilscheibe als Langloch ausgebildet, das aber auch eine runde oder in Abhängigkeit vom Platzangebot und der Stabilität des betreffenden Ventilteils eine andere geometrische Form annehmen kann. Beispielsweise kann eine Verteilungsaussparung dadurch realisiert sein, dass eine feststehende Ventilscheibe statt mehrerer einzelner Langlöcher mittig einen großflächigen Durchbruch aufweist, so dass die Ventilscheibe als Ring ausgebildet ist, ggf. mit einem Zwischensteg, der zwei Verteilungsaussparungen voneinander separiert.

Bei der Herstellung derartiger Keramikscheibenventile wirkt sich besonders vorteilhaft aus, dass die erfindungswesentlichen Verteilungsaussparungen durch eine einfache Anpassung von Herstellungsformen, beispielsweise Spritzgußformen erzielt werden können. Üblicherweise wird eine derartige Verteilungsaussparung durch einen Vorsprung an der Oberfläche einer derartigen Spritzgussform erreicht. Bei einer lochartigen Aussparung einer feststehenden Ventilscheibe kann durch Bohren oder Stanzen eine über die gesamte Materialdicke der Ventilscheibe reichende Aussparung mit einem einfachen Verfahrensschritt erstellt werden. Ähnliches gilt auch für analoge über die gesamte Materialdicke erstreckte Aussparungen bei Dichtungen.

Bevorzugt wird im Rahmen der Erfindung die Verteilungsaussparung kanalartig ausgebildet. Hierunter ist zu verstehen, dass sie durch eine lang gestreckte, wesentlich längere als breite und tiefe Geometrie einen Fluidweg von einem Anfangspunkt zu einem Endpunkt definiert. Unter einem Fluid kann dabei sowohl eine Flüssigkeit als auch ein Gas zu verstehen sein. Eine derartige kanalförmige Verteilungsaussparung verbindet dann die im Keramikscheibenventil vorhandenen Durchlaufkanäle vorzugsweise auf kürzestem Weg, ohne dass die Fluide, insbesondere Heißwasser, innerhalb der Verteilungsaussparung längere Zeit stehen bleiben oder sich verwirbeln und sich dadurch beispielsweise Kalkablagerungen oder andere Verunreinigungen anderer Art bilden können.

Für die Herstellung des Keramikscheibenventils hat es sich als vorteilhaft erwiesen, wenn die Verteilungsaussparung im Ventilgehäuse angeordnet ist. Ventilgehäuse werden meist aus Kunststoff im Spritzgussverfahren hergestellt. Die Verteilungskanäle sind, wie in der EP 1 916 459 A2 erkennbar, überwiegend innerhalb der Ventilgehäuse angeordnet, so dass die übrigen Bauelemente des erfindungsgemäßen Keramikscheibenventils nicht angepasst werden müssen, sondern im Wesentlichen unverändert bleiben können.

Eine alternative Ausführung sieht ein Keramikscheibenventil mit mindestens einer elastischen Dichtung in Anlage sowohl am Ventilgehäuse als auch am Scheibenpaket vor, wobei die Verteilungsaussparung in der elastischen Dichtung angeordnet ist. Auch elastische Dichtungen werden üblicherweise im Spritzgussverfahren hergestellt, sodass ihre veränderte Gestaltung im Sinne einer Verteilungsaussparung ebenfalls keinen nennenswerten Aufwand darstellt. Eine Anordnung der Aussparung in der Dichtung statt im Ventilgehäuse bietet eine größere Flexibilität in der Konstruktion des Ventils und kann beispielsweise aus Platzgründen erforderlich sein.

Eine Verteilungsaussparung kann auch in einer Kombination aus einer Aussparung im Ventilgehäuse und einer in einer elastischen Dichtung auf den beiden einander zugekehrten Seiten des Ventilgehäuses und der elastischen Dichtung, ausgebildet werden. Hierdurch sind die Tiefen der beiden Teile der Verteilungsaussparung reduzierbar, wodurch die beiden Ventilteile kompakter auszubilden sind. Eine größere Kompaktheit macht sich insbesondere in einer größeren Lebensdauer der Dichtungen vorteilhaft bemerkbar.

Die räumliche Anordnung der Zulauf- und Ablaufabschnitte kann auf ein und derselben Seite der Steuerscheibe vorgesehen sein. Der Weg eines Fluids durch das Keramikscheibenventil würde dann in etwa um 180 Grad umgelenkt. Bevorzugt wird im Rahmen der Erfindung, dass der Zulauf- und der Ablaufabschnitt auf entgegengesetzten Seiten der Steuerscheibe positioniert sind. Hierdurch sind verschiedene Funktionen des Ventils einfacher anzuordnen und dadurch Platzprobleme zu umgehen. Weiterhin ist eine lineare Durchleitung von Fluiden möglich, wobei hierunter verstanden wird, dass Fluide in einer im Wesentlichen gleichförmigen Fließrichtung durch das Keramikscheibenventil geleitet werden. Im Rahmen dessen wird besonders bevorzugt, dass durch geeignetes Verstellen der Steuerscheibe eine geradlinige, kanalartige Verbindung zwischen Zu- und Ablaufbereich herstellbar ist, die als Heißwasser-Verbindung ausgebildet ist. Hierdurch kann der Gefahr von Kalkablagerungen im Bereich der Heißwasserverbindung entgegengewirkt werden. Die Ausbildung einer Verbindung als Heißwasser-Verbindung wird erreicht durch einen Heißwasser-Anschluss an den Zulauf der Verbindung.

Die elastische Dichtung weist vorzugsweise eine Ausgangsdicke, das heißt eine Dicke, die bei der Produktherstellung vorliegt, von mindestens 5mm auf. Dadurch erhält die Dichtung eine ausreichende Elastizität, und auch bei langjährigem Einsatz liegt genügend Materialdicke vor, um einen ausreichenden Anpressdruck auf die Keramikscheiben und auf das Ventilgehäuse aufrecht zu erhalten.

Im Rahmen der Erfindung können unterschiedliche Keramikscheibenventile verwendet werden, die entsprechend mit unterschiedlichen funktionsgebundenen Eingängen bzw. Ausgängen ausgestattet sind. Bevorzugt umfassen sie mindestens einen Heißwassereingang und/oder einen Wasserdampfeingang. Die Eingänge können auch kombiniert werden. Ihre Funktion als Heißwasser- bzw. Wasserdampfeingang ergibt sich durch einen Anschluss an eine Heißwasser- bzw. eine Wasserdampfleitung. Weiterhin werden sie an die spezifischen Anforderungen des jeweiligen Fluids materialtechnisch angepasst. Beispielsweise sind Wasserdampfleitungen und -eingänge bevorzugt aus nicht-porösem Material gebildet und Heißwassereingänge aus Silikonmaterial, um Kalkablagerungen vorzubeugen. Zudem wird ein Material verwendet, das für die Temperatur von Heißwasser bzw. Wasserdampf geeignet ist.

Analog hierzu weist ein erfindungsgemäßes Keramikscheibenventil auch einen Heißwasserausgang und/oder einen Wasserdampfausgang auf. Diese sind theoretisch ebenfalls kombinierbar und werden gegebenenfalls ergänzt durch weitere Ausgänge, wie beispielsweise einen Drainage-Ausgang, und weitere Eingänge wie beispielsweise einen Lufteingang zum Herstellen von luftangereichertem Wasserdampf, beispielsweise zum Aufschäumen von Milch.

Die Erfindung umfasst weiterhin einen Heißgetränkeautomaten, insbesondere einen Kaffeevollautomaten, mit einer erfindungsgemäßen Ventilanordnung.

Das Prinzip der Erfindung wird im Folgenden anhand einer Zeichnung beispielshalber noch näher erläutert. In der Zeichnung zeigen:
- Figur 1: eine Explosionszeichnung eines erfindungsgemäßen Keramikscheibenventils ohne Ventilscheiben,
- Figuren 2a, 2b: Draufsichten auf die Innenseiten beider Teile des Gehäuses des Keramikscheibenventils,
- Figuren 3a, 3b: die Draufsichten gemäß den Figuren 2a und 2b mit Dichtungen,
- Figuren 4a, 4b: eine Draufsicht des unteren Teilgehäuses und eine Schnittansicht entlang der Schnittlinie A-A'
- Figuren 5a, 5b: eine Draufsicht des Keramikscheibenventils und eine Schnittansicht entlang der Schnittlinie B-B'.

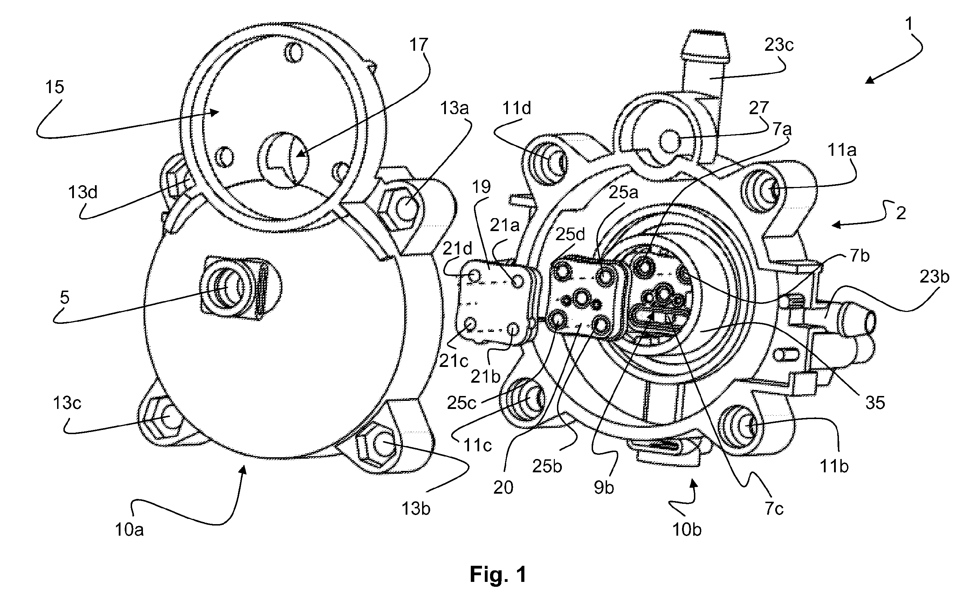

Figur 1 zeigt ein Keramikscheibenventil 1 ohne die dazugehörigen Keramikscheiben in Explosionsdarstellung. Es besteht aus einem Gehäuse 2, das durch ein unteres Teilgehäuse 10a und ein oberes Teilgehäuse 10b gebildet wird. Im Inneren des Gehäuses 2 werden drei Keramikscheiben zwischen zwei elastischen Dichtungen 19, 20 zwischen den beiden Teilgehäusen 10a, 10b fixiert.

Das untere Teilgehäuse 10a weist einen Zulaufstutzen 5 zur Zuführung von Heißwasser und/oder Wasserdampf, eine Motor-Aufnahmeschale 15 zur Aufnahme eines Elektromotors (nicht dargestellt), eine Durchgangsbohrung 17 für eine Übertragungswelle des Elektromotors (ebenfalls nicht dargestellt) und vier randseitig angebrachte Bohrungen 13a; 13b, 13c, 13d für Fixierschrauben auf. An ihrem dem Betrachter zugewandten Seite weisen die Bohrungen 13a; 13b, 13c, 13d jeweils die Gegenform der Köpfe von Schraubenmuttern auf, die in diese Formen eingelassen werden können, so dass eine von der anderen Seite her durchgeführte Schraube einfacher in eine ihr zugeordneten Schraubenmutter eingeschraubt werden kann.

Das obere Teilgehäuse 10b weist komplementär zu den Bohrungen 13a, 13b, 13c, 13d des unteren Teilgehäuses 10a ebenfalls Bohrungen 11a, 11b, 11c, 11d auf. Mit Hilfe von durch beide einander zugeordneten Bohrungspaare geführten Fixierschrauben (nicht dargestellt) können beide Teilgehäuse 10a, 10b miteinander verschraubt werden.

Das obere Teilgehäuse 10b weist eine Kammervertiefung 27 für die Übertragungswelle des Elektromotors mitsamt Zahnrädern (nicht gezeigt) auf sowie eine Anzahl von Durchlassöffnungen 7a, 7b, 7c an seiner Innenseite, die mit Auslassstutzen 23b, 23c und weiteren, verdeckten Auslassstutzen korrespondieren. Die Durchlassöffnungen sind im Bereich einer durch einen Kammerring 35 gebildeten Ventilkammer angeordnet, die ein analoges Pendant auf der Innenseite des unteren Teilgehäuses 10a hat, das ebenfalls durch einen solchen Kammerring gebildet ist. Um die untere Durchlassöffnung 7c ist eine Verteilungsaussparung 9b in Form einer länglichen Vertiefung im Teilgehäuse 10b ausgebildet. Die Durchlassöffnung 7c ist mittig in der Verteilungsaussparung 9b angeordnet. Hierdurch können Fluide durch die Verteilungsaussparung 9b von beiden Seiten her aus unterschiedlichen Kanälen auf kurzem Weg in die Durchlassöffnung 7c gelangen. Die Fluide aus den beiden Bohrungen 25b, 25c werden also in einer Art T-förmigem Kanal direkt über die Verteilungsaussparung 9b und die Durchlassöffnung 7c abgeleitet.

Die zwei elastischen Dichtungen 19, 20 weisen jeweils mehrere Bohrungen 21a, 21b, 21c, 21d bzw. 25a, 25b, 25c, 25d auf, die in der Anordnung des Keramikventils in zusammengesetzten Zustand miteinander fluchten. Zwei Bohrungen 25d, 25a führen weiterhin in gerader Linie zu einer der Durchlassöffnungen 7a, 7b. Die zwei anderen Bohrungen 25b, 25c führen hingegen hin zur Verteilungsaussparung 9b, in der ihr weiterführender Verlauf gebündelt wird durch die gemeinsame Ableitung über die Verteilungsaussparung 9b und die Durchlassöffnung 7c. Ein einziger Ausgang, nämlich die Durchlassöffnung 7c, erfasst also mehrere Kanäle, nämlich die, die durch die oben genannten Kombinationen der Bohrungen in den beiden elastischen Dichtungen 19, 20 ausgebildet werden können.

Die Leitung von Fluiden aus unterschiedlichen Zulaufbereichen erfolgt also über die kanalartige Verteilungsaussparung 9b, wodurch entweder eine Verbindungsbohrung im Inneren des oberen Gehäuseteils 10b entfällt oder zusätzliche Bohrungen in Fortführung der Linien der Bohrungen 21c und 25c bzw. der Bohrungen 21b und 25b. Mit Hilfe der Verteilungsaussparung 9b werden daher der Aufbau und die Herstellung des Keramikscheibenventils vereinfacht.

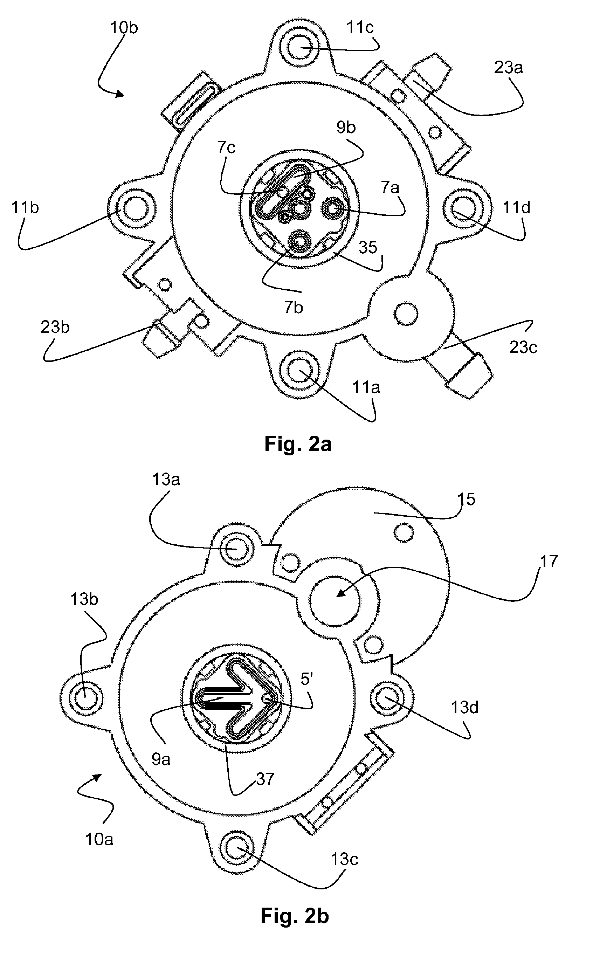

In den Figuren 2a und 2b wird dieser Effekt deutlicher. Die Draufsicht gemäß Fig. 1 auf das obere Teilgehäuse 10b (Figur 2a) mit den bekannten Elementen ist lediglich leicht gedreht. Dadurch wird am oberen Teilgehäuse ein weiterer Auslassstutzen 23a erkennbar.

In Figur 2b ist eine analoge Draufsicht auf die Innenseite des unteren Teilgehäuses 10a gezeigt. Dieses weist in einer durch einen Kammerring 37 umschlossenen Ventilkammer eine einzelne Einlassöffnung 5', die in der Spitze einer pfeilförmigen Verteilungsaussparung 9a positioniert ist. Analog zur Ableitung von Fluiden über die Verteilungsaussparung 9b und die Durchlassöffnung 7c im oberen Teilgehäuse 10b wird in das untere Teilgehäuse 10a ein Fluid nur über die Einlassöffnung 5' eingeleitet und über die Verteilungsaussparung 9b auf verschiedene Kanäle in den elastischen Dichtungen - in Abhängigkeit von der Stellung der Steuerscheibe (nicht dargestellt) verteilt. Die pfeilförmige Verteilungsaussparung 9a ist geometrisch so gestaltet, dass sie Fluide auf alle Bohrungen 21a, 21b, 21c, 21d der darüber liegenden Dichtung 19 (nicht dargestellt) verteilt. Die Verteilungsaussparung 9a könnte in diesem Falle, da über sie alle Bohrungen 21a, 21b, 21c, 21d mit Fluiden versorgt werden können, auch als einfache, beispielsweise kreisrunde Vertiefung, etwa in der Ausdehnung der gesamten Ventilkammer, realisiert sein. Die Pfeilform ergibt sich aus der direkten geradlinigen Verbindung der Bohrungen 21a, 21b, 21c, 21d mit der Einlassöffnung 5'.

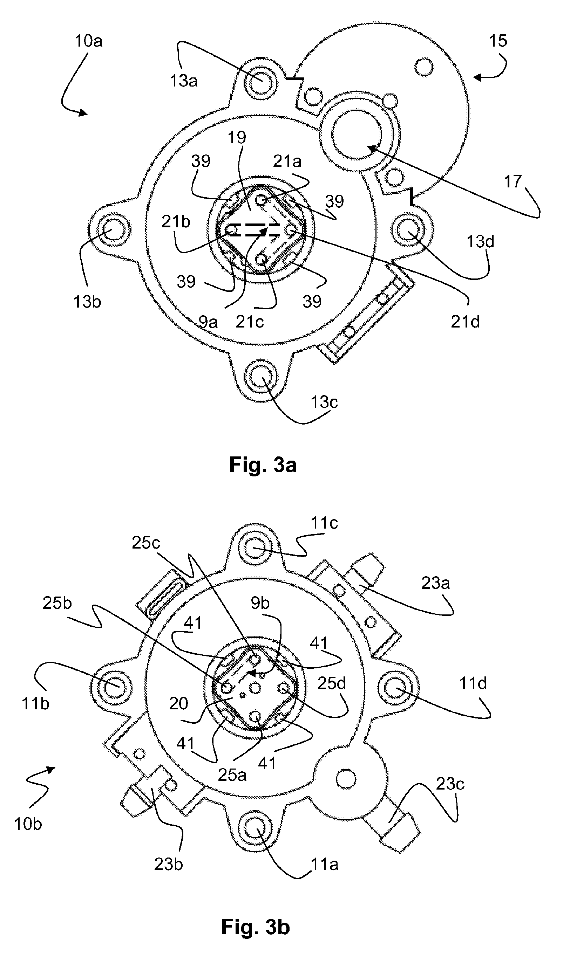

Die Zuordnung aller Bohrungen 21a, 21b, 21c, 21d zu den Kanälen der Verteilungsaussparung 9a wird in den Figuren 3a und 3b verdeutlicht, in der dieselben Ansichten der Teilgehäuse 10a, 10b nochmals dargestellt sind, hier jedoch mit in die jeweiligen Ventilkammern eingelegten Dichtungen 19, 20, die jeweils durch vier Fixierzähne 39 bzw. 41 in Position innerhalb der Ventilkammern gehalten werden. Strichliert angedeutet sind die Verläufe der Verteilungsaussparungen 9a, 9b, die in den Teilgehäusen 10a, 10b angeordnet und komplementär auf der in der Darstellung sichtabgewandten Seite der elastischen Dichtungen ausgebildet sind. Die Verteilungsaussparungen 9a, 9b in den Teilgehäusen 10a, 10b bilden daher zusammen mit ihren Gegenparts in den Dichtungen 19, 20 Verteilungskanäle.

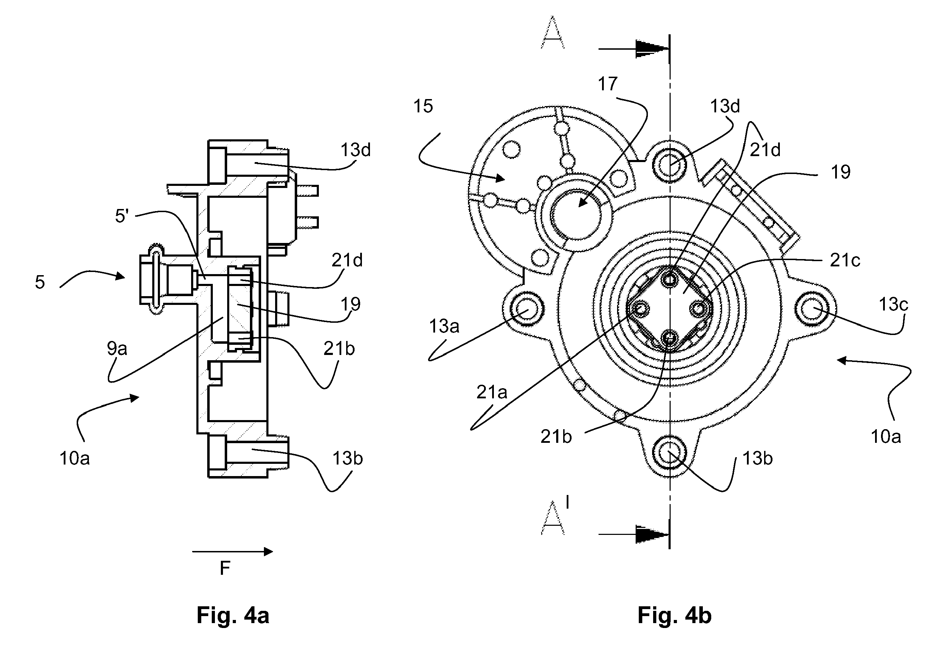

Figur 4b zeigt eine Draufsicht auf das untere Teilgehäuse 10a mit in die Ventilkammer eingefügter Dichtung 19. In Figur 4a ist die Schnittansicht entlang der Schnittlinie A-A' gezeigt. Sie verdeutlicht die Fließrichtung F von Fluiden. Durch den Zulaufstutzen 5 und die Einlassöffnung 5' gelangt Fluid in die Verteilungsaussparung 9a, die der Einfachheit halber hier nur im Bereich des unteren Teilgehäuses 10a aufgetragen ist. Dort wird das Fluid auf die Bohrungen 21a, 21b, 21c, 21d verteilt. In Abhängigkeit von der Stellung der Steuerscheibe wird das Fluid dann in Richtung F des oberen Gehäuseteils 10b weitergeleitet.

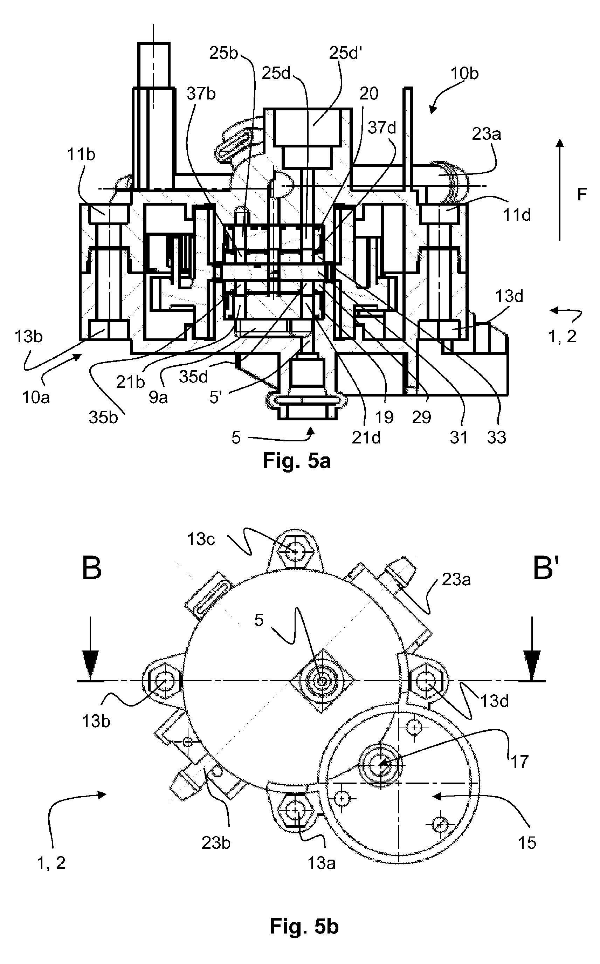

Figur 5b zeigt das gesamte Keramikventil 1 in einer Draufsicht von der Unterseite, d. h. von der unteren Außenseite des unteren Teilgehäuses 10a. In Figur 5a ist eine Schnittdarstellung entlang der Schnittlinie B-B' gezeigt, wobei rechts seitlich über den für die Erfindung wesentlichen Bereich hinausragende Elemente der Übersichtlichkeit wegen weggelassen wurden. In dieser Gesamtschau sind neben den bereits erwähnten Elementen auch drei in einem Paket angeordnete Ventilscheiben 29, 31, 33 zu erkennen, wobei die beiden zuoberst und zuunterst liegenden Ventilscheiben 29, 33 drehfixiert, d. h. analog zur Fixierung der Dichtungen mit Hilfe der Fixierzähne 39, 41 so befestigt sind, dass sie sich im zusammengebauten Zustand des Keramikscheibenventils nicht drehen können. Die mittlere Ventilscheibe 31 ist als Steuerscheibe ausgebildet, die in ihrer Position durch Drehen mit Hilfe des erwähnten Elektromotors und der Übertragungswelle (beide nicht dargestellt) variiert werden kann.

Die beiden feststehenden Ventilscheiben 29, 33 weisen jeweils Kanalbohrungen 35b, 35d, 37b, 37d sowie weitere hier nicht sichtbare Kanalbohrungen auf, die jeweils in Fortführung der Bohrungen 21a, 21b, 21c, 21d der Dichtung 19 stehen, bzw. die Bohrungen 25a, 25b, 25c, 25d der Dichtung 20 fortführen. Hierdurch entsteht ein Zulaufabschnitt stromauf der Steuerscheibe 31. Er besteht aus dem Zulaufstutzen 5, der Einlassöffnung 5', der Verteilungsaussparung 9a sowie wahlweise den Kanälen, die durch die Bohrungen 21a, 21b, 21c, 21d und durch die Kanalbohrungen 35b, 35d sowie anderen Kanalbohrungen der feststehenden Ventilscheibe 29. Analog entsteht ein Ablaufabschnitt durch die Kanalbohrungen 37b, 37d sowie weitere Kanalbohrungen in der feststehenden Ventilscheibe 33, durch die Bohrungen 25a, 25b, 25c, 25d in der mit dem oberen Teilgehäuse verbundenen Dichtung 20 und durch die Durchlassöffnungen 7a, 7b, 7c, ggf. in Kombination mit der Verteilungsaussparung 9b, sowie die Auslassstutzen 23a, 23b, 23c oder einen zentralen Auslass 25d' an der Oberseite des Keramikscheibenventils 1.

Zwischen der Unterseite und der Oberseite ist bei geeigneter Stellung der Steuerscheibe 31 eine lineare Durchleitung von Fluiden möglich über den Zulaufstutzen 5 in Richtung des Auslasses 25d'. Diese lineare Durchleitung ist bevorzugt einer Heißwasserdurchleitung vorbehalten, da hierdurch wiederum der Gefahr von Kalkablagerungen innerhalb des Keramikventils 1 vorgebeugt werden kann.

Da es sich bei dem vorhergehenden, detailliert beschriebenen Keramikventil um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Ausgestaltungen der geometrischen Anordnung von Bauelementen, insbesondere des Elektromotors und anderer Elemente, in anderer Form als in der hier beschriebenen folgen. Ebenso kann die Anzahl der Keramikscheiben, ihre Bewegbarkeit oder Fixierung und die Richtung ihrer Bewegbarkeit in einer anderen Form ausgestaltet werden, wenn dies aus Platzgründen bzw. designerischen Gründen notwendig ist. Analoges gilt für die Anzahl und Ausgestaltung insbesondere der elastischen Dichtungen. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Keramikscheibenventil
- 2: Gehäuse
- 5: Zulaufstutzen
- 5': Einlassöffnung
- 7a, 7b, 7c: Durchlassöffnungen
- 9a, 9b: Verteilungsaussparungen
- 10a: unteres Teilgehäuse
- 10b: oberes Teilgehäuse
- 11a, 11b, 11c, 11d, 13a; 13b, 13c, 13d: Bohrungen (für Schrauben)
- 15: Motor-Aufnahmeschale
- 17: Durchgangsbohrung
- 19, 20: Dichtungen
- 21a, 21b, 21c, 21d, 25a, 25b, 25c, 25d: Bohrungen (in Dichtungen)
- 23a, 23b, 23c: Auslassstutzen
- 25d': zentraler Auslass
- 27: Kammervertiefung
- 29, 33: feststehende Ventilscheiben
- 31: Ventilscheibe - Steuerscheibe
- 35, 37: Kammerringe
- 35b, 35d, 37b, 37d: Kanalbohrungen
- 38, 41: Fixierzähne
- F: Fließrichtung

## Patentansprüche

1. Keramikscheibenventil (1), insbesondere für die Verteilung von Heißwasser und/oder Wasserdampf in einem Heißgetränkeautomaten,
mit einem Ventilgehäuse (2),
mit darin in einem Paket angeordneten Ventilscheiben (29; 31; 33),
wovon mindestens eine Ventilscheibe (29; 31; 33) eine verstellbare Steuerscheibe (31) mit wenigstens einer Kanalbohrung ist, und wenigstens eine feststehende Ventilscheibe (29; 33) mindestens einen Eingangs- (35b; 35d) und/oder Ausgangskanal (37b, 37d) umfasst,
mit mindestens einem Zulaufabschnitt (5, 5', 9a, 21a; 21b, 21c, 21d; 35b; 35d) stromauf und einem Ablaufabschnitt (37b; 37d, 25a; 25b; 25c; 25d, 9b, 23a; 23b; 23c; 25d') stromab der Steuerscheibe (31),
**gekennzeichnet durch** eine Verteilungsaussparung (9a; 9b) im Zulaufabschnitt (5, 5', 9a, 21a; 21b, 21c, 21d; 35b; 35d) und/oder im Ablaufabschnitt (37b; 37d, 25a; 25b; 25c; 25d, 9b, 23a; 23b; 23c; 25d'), die mehrere Eingangskanäle (35b, 35d) und/oder mehrere Ausgangskanäle (37b, 37d) miteinander verbindet.

2. Keramikscheibenventil gemäß Anspruch 1, **dadurch gekennzeichnet, dass** die Verteilungsaussparung (9a, 9b) in einem feststehenden Ventilteil (10a, 10b, 19, 20, 29, 33) angeordnet ist.

3. Keramikscheibenventil gemäß Anspruch 1 oder 2, **dadurch gekennzeichnet, dass** die Verteilungsaussparung (9a, 9b) an einer Berühr- und/oder Grenzfläche zwischen Ventilteilen (10a, 10b, 19, 20, 29, 31, 33) angeordnet ist.

4. Keramikscheibenventil gemäß einem der vorhergehenden Ansprüche, **dadurch gekennzeichnet, dass** die Verteilungsaussparung (9a; 9b) kanalartig ausgebildet ist.

5. Keramikscheibenventil gemäß einem der vorhergehenden Ansprüche, **dadurch gekennzeichnet, dass** die Verteilungsaussparung (9a; 9b) im Ventilgehäuse (2) angeordnet ist.

6. Keramikscheibenventil gemäß einem der vorhergehenden Ansprüche mit mindestens einer elastischen Dichtung (19, 20) in Anlage am Ventilgehäuse (2) und am Paket, **dadurch gekennzeichnet, dass** die Verteilungsaussparung (9a, 9b) in der elastischen Dichtung (19, 20) angeordnet ist.

7. Keramikscheibenventil gemäß einem der vorhergehenden Ansprüche, **dadurch gekennzeichnet, dass** der Zulaufabschnitt (5, 5', 9a, 21a; 21b, 21c, 21d; 35b; 35d) und der Ablaufabschnitt (37b; 37d, 25a; 25b; 25c; 25d, 9b, 23a; 23b; 23c; 25d') auf entgegengesetzten Seiten der Steuerscheibe (31) positioniert sind.

8. Keramikscheibenventil gemäß Anspruch 7, **dadurch gekennzeichnet, dass** durch Verstellen der Steuerscheibe (31) eine geradlinige kanalartige Verbindung zwischen Zu- und Ablaufabschnitt (5, 5', 9a, 21a; 21b, 21c, 21d; 35b; 35d, 37b; 37d, 25a; 25b; 25c; 25d, 9b, 23a; 23b; 23c; 25d') herstellbar ist, die als Heißwasser-Verbindung ausgebildet ist.

9. Keramikscheibenventil gemäß einem der vorhergehenden Ansprüche mit mindestens einer elastischen Dichtung (19, 20) in Anlage am Ventilgehäuse (2) und am Paket, **dadurch gekennzeichnet , dass** die elastische Dichtung eine Ausgangsdicke von mindestens 5 mm aufweisen.

10. Heißgetränkeautomat, insbesondere Kaffeevollautomat, mit einem Keramikscheibenventil (1) gemäß einem der vorhergehenden Ansprüche.
